# EUROPEAN PATENT APPLICATION

(11) **EP 4 546 756 A1**
(43) Date of publication of application: **30.04.2025**
(21) Application number: 24169710.1
(22) Date of filing: 11.04.2024
(51) Int. Cl.: H04L 67/12, B60L 58/00, H04L 69/08, H04L 69/18, H04L 69/22

(54) **APPARATUS AND METHOD FOR PROCESSING COMMUNICATION WITH BATTERY MODULE**

(30) Priority: 25.10.2023 KR 20230143779
(71) Applicant: Samsung SDI Co., Ltd., Yongin-si, Gyeonggi-do 17084 (KR)
(72) Inventor: Kim, Gabriel, 16678 Suwon-si, Gyeonggi-do (KR)
(74) Representative: Gulde & Partner

(57) **Abstract**

The present invention relates to an apparatus and method for processing communication with a battery module (10). The battery module communication processing apparatus (100) includes: a connector (110) connected to a communication port of a battery module (10); and a processor (120) establishing communication of the battery module (10) by determining a communication protocol of the battery module (10 using the number of pins of the connector (110) connected to the communication port and data of the battery module (10) transmitted through the connector (110). The apparatus (100) and method can facilitate recycling of battery modules (10) while reducing costs and difficulty for recycling through improvement in compatibility between various communication protocols utilized by the battery modules (10).

## Description

### BACKGROUND

### 1. Field

The present invention relates to an apparatus and method for processing communication with a battery module.

### 2. Description of the Related Art

Although electric vehicles provide energy-efficient transportation, batteries of the electric vehicles have limited lifespan.

Batteries may have to be replaced at least once during the lifetime of a car. However, the batteries can have sufficient energy storage capacity and can be recycled into an energy storage system (ESS) and the like.

However, each electric vehicle manufacturer or battery module manufacturer may have their own communication protocol and data delivery method for a battery management system thereof. These various communication protocols add complexity to a battery module recycling process and can increase costs and difficulties for recycling.

This section is intended only to provide a better understanding of the background of the invention and thus may include information which is not necessarily prior art.

### Summary

Embodiments of the present disclosure provide an apparatus and method for processing communication with a battery module, which can facilitate recycling of battery modules while reducing costs and difficulties for recycling through improvement in compatibility between various communication protocols used by the battery modules.

The above and other aspects and features of the present invention will become apparent from the following description of embodiments of the present invention.

In accordance with an aspect of the present disclosure, an battery module communication processing apparatus includes: a connector connected to a communication port of a battery module; and a processor establishing communication of the battery module by determining a communication protocol of the battery module based on the number of pins of the connector connected to the communication port and data of the battery module transmitted through the connector.

In some embodiments, the processor may establish communication of the battery module depending on whether the communication protocol is a preregistered communication protocol.

In some embodiments, the processor may convert and transmits data between the battery module and an external device according to the communication protocol, upon (e.g. in response to) determining that the communication protocol is the preregistered communication protocol.

In some embodiments, the processor may generate a new communication protocol preset by analyzing rules of the communication protocol and a format of the data upon determining that the communication protocol is not the preregistered communication protocol.

In some embodiments, the communication protocol preset may comprise at least one of header information, payload length, use of cyclical redundancy check (CRC), and communication timing.

In some embodiments, the processor may convert and transmit data between the battery module and the external device according to the communication protocol preset.

In some embodiments, the processor may extract characteristic information of packets of the data, may classify the packets based on the characteristic information, and may generate the communication protocol preset based on a classification result. The characteristic information of each packet may comprise at least one of a length, a bit pattern between a header and a payload, and an end byte thereof.

In some embodiments, the processor may apply features of packets classified from the data to a machine learning model to determine whether the communication protocol is the preregistered communication protocol.

In some embodiments, the machine learning model may be trained based on the features of the packets as input values, and the features of each packet may comprise at least one of a bit length, a header, a payload, a CRC, a timestamp, and an inter-packet interval thereof.

In some embodiments, the processor may have a directory for managing the battery module and a directory for managing the communication protocol of the battery module, item information of the battery module may be stored in the directory for managing the battery module, and information about the communication protocol of the battery module may be stored in the directory for managing the communication protocol.

In some embodiments, the processor may convert each of the data transmitted from each battery module according to the communication protocol, may merge the converted data into a data stream, and may transmit the data stream to an external device.

According to the present disclosure, the battery module communication processing apparatus improves compatibility between various communication protocols used by battery modules, thereby facilitating recycling of the battery modules while reducing costs and difficulties for recycling.

According to the present disclosure, the battery module communication processing apparatus can flexibly change the number of battery modules according to a user need, thereby improving utilization of the battery modules.

According to the present disclosure, the battery module communication processing apparatus is compatible with cloud environments to enable improved utilization of energy storage capacity.

In accordance with another aspect of the present disclosure, a battery module communication processing method comprises: when a communication port of a battery module is connected to a connector, recognizing, by a processor, the number of pins of the connector connected to the communication port, and determining a communication protocol of the battery module using data of the battery module transmitted through the connector; determining, by the processor, whether the communication protocol is a preregistered communication protocol; and establishing, by the processor, communication of the battery module depending on whether the communication protocol is the preregistered communication protocol.

In some embodiments, in establishing communication of the battery module, the processor may generate a new communication protocol preset by analyzing rules of the communication protocol and a format of the data upon determining that the communication protocol is not the preregistered communication protocol, and, in establishing communication of the battery module, the processor may convert and transmit data between the battery module and an external device according to the communication protocol preset.

In some embodiments, in establishing communication of the battery module, the processor may generate a new communication protocol preset by analyzing rules of the communication protocol and a format of the data upon determining that the communication protocol is not the preregistered communication protocol, and, in establishing communication of the battery module, the processor may extract characteristic information of packets of the data, may classify the packets based on the characteristic information, and may generate the communication protocol preset based on a classification result, wherein the characteristic information of each packet may comprise at least one of a length, a bit pattern between a header and a payload, and an end byte thereof.

In some embodiments, in determining whether the communication protocol is a preregistered communication protocol, the processor may apply features of packets classified from the data to a machine learning model to determine whether the communication protocol is the preregistered communication protocol, and wherein the machine learning model may be trained based on the features of the packets as input values, and the features of each packet may comprise at least one of a bit length, a header, a payload, a CRC, a timestamp, and an inter-packet interval thereof.

In some embodiments, the establishing the communication of the battery module may include: converting and transmitting, by the processor, data between the battery module and an external device according to the communication protocol, upon determining that the communication protocol is the preregistered communication protocol.

In some embodiments, the establishing the communication of the battery module may include: generating, by the processor, a communication protocol preset by analyzing rules of the communication protocol and a format of the data, upon determining that the communication protocol is not the preregistered communication protocol.

In some embodiments, the establishing the communication of the battery module may include: converting and transmitting, by the processor, data between the battery module and an external device according to the communication protocol preset.

In some embodiments, the establishing the communication of the battery module may include: extracting, by the processor, characteristic information of packets of the data; classifying, by the processor, the packets based on the characteristic information; and generating, by the processor, the communication protocol preset based on a classification result, and wherein the characteristic information of each packet may include at least one of a length, a bit pattern between a header and a payload, and an end byte thereof.

In some embodiments, the communication protocol preset may include at least one of header information, a payload length, use of cyclic redundancy check (CRC), and communication timing.

In some embodiments, the battery module communication processing method may further include: determining, by the processor, whether the communication protocol is a preregistered communication protocol by applying features of packets classified from the data to a machine learning model.

In some embodiments, the machine learning model may be trained based on the features of the packets as input values, and the features of each packet may include at least one of a bit length, a header, a payload, a cyclic redundancy check (CRC), a timestamp, and an inter-packet interval thereof.

In some embodiments, the establishing the communication of the battery module may include: converting, by the processor, each of the data transmitted from each battery module according to the communication protocol to generate converted data; merging the converted data into a data stream, and transmitting the data stream to an external device.

However, aspects and features of the present invention are not limited to the above and other aspects and features not mentioned will be clearly understood by those skilled in the art from the detailed description given below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### Brief Description of the Drawings

The following drawings attached to this specification illustrate embodiments of the present invention, and further describe aspects and features of the present invention together with the detailed description of the present invention. Thus, the present invention should not be construed as being limited to the drawings:
FIG. 1 is a block diagram of a battery module communication processing apparatus according to an embodiment of the present invention;
FIG. 2 is a flowchart illustrating a battery module communication processing method according to an embodiment of the present invention;
FIG. 3 illustrates a training processor of a machine learning model according to an embodiment of the present invention;
FIG. 4 is a flowchart illustrating a communication protocol determination process according to an embodiment of the present invention;
FIG. 5 is a flowchart illustrating a process of generating a communication protocol preset according to an embodiment of the present invention;
FIG. 6 illustrates a parallel data stream processing process according to an embodiment of the present invention.

### Detailed Description

Hereinafter, exemplary embodiments of the present invention will be described, in detail, with reference to the accompanying drawings. The terms or words used in this specification and claims should not be construed as being limited to the usual or dictionary meaning and should be interpreted as having meanings and concepts consistent with the technical idea of the present invention based on the principle that the inventor can be his/her own lexicographer to appropriately define the concept of the term to explain his/her invention in the best way. The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof. Further, the use of "may" when describing embodiments of the present invention relates to "one or more embodiments of the present invention."

In the figures, dimensions of the various elements, layers, etc. may be exaggerated for clarity of illustration. The same reference numerals designate the same elements.

References to two compared elements, features, etc. as being "the same," may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

When an arbitrary element is referred to as being disposed (or located or positioned) "above" (or "below") or "on" (or "under") a component, it may mean that the arbitrary element is placed in contact with the upper (or lower) surface of the component and may also mean that another component may be interposed between the component and any arbitrary element disposed (or located or positioned) on (or under) the component.

In addition, it will be understood that, when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

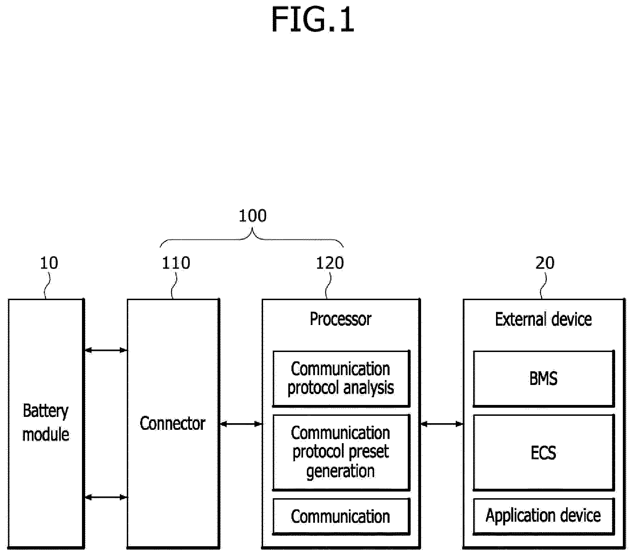

FIG. 1 is a block diagram of a battery module communication processing apparatus according to an embodiment of the present invention.

Referring to FIG. 1, a battery module communication processing apparatus 100 according to an embodiment of the present invention includes a connector 110 and a processor 120.

The battery module communication processing apparatus 100 may be realized by a terminal, a computer system, a server, or the like.

The connector 110 may be physically connected to a communication port of the battery module 10.

The battery pack may include at least one battery module 10.

The battery module 10 may include a plurality of battery cells and a module housing.

The battery cells may be stacked and accommodated within the module housing. The battery cells may be provided with cathode leads and anode leads. The battery cells may be round, prismatic, or pouch type battery cells depending on the shape of the battery.

The connector 110 may transmit the number of pins connected to the battery module 10 to the processor 120.

The connector 110 may transmit data of the battery module 10 to the processor 120 through a communication port of the battery module 10.

The connector 110 is not particularly limited in size, type, or shape so long as the connector 110 can be connected to the communication port of the battery module 10.

The connector 110 may be provided in plural. In this case, each connector 110 may be connected one-to-one to the battery module 10.

In this embodiment, by way of example, one connector 110 is connected to one battery module 10.

An external device 20 may be connected to the battery module communication processing apparatus 100 through various communication networks to communicate with the battery module 10 through the battery module communication processing apparatus 100.

The communication networks may employ 3GPP (3^{rd} Generation Partnership Project), LTE (Long Term Evolution), 5G (5^{th} Generation), WIMAX (World Interoperability for Microwave Access), wired or wireless Internet, LAN (Local Area Network), wireless LAN (Wireless Local Area Network), WAN (Wide Area Network), PAN (Personal Area Network), Bluetooth, Wi-Fi (Wireless Fidelity), and the like, without being limited thereto.

The external device 20 may control the battery module 10 through the battery module communication processing apparatus 100. The external device 20 may be a central processing unit, a battery management system (BMS) or an energy storage system (ESS), and various application devices, without being limited thereto.

The external device 20 may be present in the form of a cloud server and may have various structures that can control the battery module communication processing apparatus 100. Accordingly, the battery module communication processing apparatus 100 may be compatible with a cloud environment to enable improved utilization of energy storage capacity.

When the connector 110 is connected to the communication port, the processor 120 may recognize the number of pins of the connector 110 connected to the communication port and may receive data of the battery module 10 through the connector 110.

Based on the recognized number of pins of the connector 110 and data of the battery module 10, the processor 120 may determine the communication protocol of the battery module 10.

The processor 120 may establish communication of the battery module 10 according to the communication protocol to allow communication to be performed between the battery module 10 and the external device 20. In this case, the processor 120 may determine whether the communication protocol is a preregistered communication protocol. If the communication protocol is a preregistered communication protocol, the processor 120 may establish communication according to the communication protocol. If the communication protocol is not the preregistered communication protocol, the processor 120 may establish a new communication protocol preset using the communication protocol and data format to establish communication.

The preregistered communication protocol may be a communication protocol between the battery module 10 and the external device 20. The preregistered communication protocol may be set depending on a manufacturer of electric vehicles, a manufacturer of the battery module 10, and the like. By storing communication protocols in advance for each electric vehicle manufacturer or each battery module manufacturer, the processor 120 may determine whether the extracted communication protocol is a preregistered communication protocol.

The processor 120 may manage the battery module 10 and the communication protocol using a directory as a data structure.

A module directory for managing the battery module 10 may store item information of the battery module 10. For example, the module directory may store a unique identifier for each battery module 10, a communication protocol used, a communication rate, and a data format. The information stored in the module directory is not particularly limited.

A communication protocol directory for managing communication protocols may store information about the communication protocol of the battery module 10. For example, the communication protocol directory may store information about communication protocols for converting and interpreting data of the battery module 10. The information stored in the communication protocol directory is not particularly limited.

When the battery module 10 is connected to the processor 120 through the connector 110, the processor 120 may determine a communication protocol and add a new item to the module directory.

When the battery module 10 is disconnected from the connector 110, the processor 120 may delete the corresponding entry from the module directory.

When data is collected from the battery module 10, the processor 120 may convert and transmit the data to the external device 20 according to the communication protocol.

The processor 120 may simultaneously process data of a plurality of battery modules 10 using multiple parallel streams. As a result, it is possible to process data of many battery modules 10 in real time. Such a parallel processing method may simultaneously support communication with many battery modules 10.

Thus, according to this embodiment, it is easy to add or delete data with respect to the battery modules 10 using different communication protocols and it is easy to scale up or down the battery modules 10.

The processor 120 may be connected to a memory (not shown), which may store instructions to perform operation, steps, and the like according to embodiments of the present invention. Here, the memory may include magnetic storage media or flash storage media in addition to volatile storage devices that require power to maintain stored information, without being limited thereto.

Additionally, the processor 120 may be configured to perform different functions divided at the hardware, software, or logic level. In such a case, dedicated hardware may be used to perform each function. To this end, the processor 120 may be realized by or include at least one of an application specific integrated circuit (ASIC), an digital signal processor (DSPs), a programmable logic device (PLD), a field programmable gate array (FPGA), a central processing unit (CPU), a microcontroller, and/or a microprocessor.

The processor 120 may be realized by a central processing unit (CPU) or system on chip (SoC), and may run an operating system or application to control a plurality of hardware or software components connected to the processor 120, and may perform various data processing and computation operations. The processor 120 may be configured to execute at least one instruction stored in the memory and store data resulting from the execution in the memory.

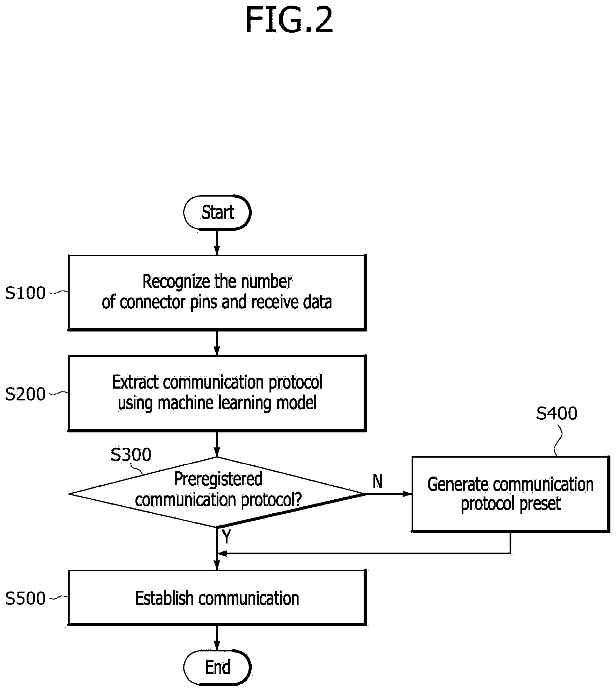

FIG. 2 is a flowchart illustrating a battery module communication processing method according to an embodiment of the present invention.

Referring to FIG. 2, when the communication port of the battery module 10 is connected to the connector 110, data of the battery module 10 is transmitted to the processor 120 through the connector 110.

The processor 120 may recognize the number of pins of the connector 110 connected to the communication port. Further, the processor 120 may receive data of the battery module 10 through the connector 110 (S 100).

The processor 120 may analyze the recognized number of pins of the connector 110 and the data to extract a communication protocol of the battery module 10 based on a machine learning model (S200). The machine learning model will be described below.

The processor 120 may determine whether the communication protocol is a preregistered communication protocol (S300).

As a result of determination in step S300, upon determining that the communication protocol is a preregistered communication protocol, the processor 120 may establish communication according to the communication protocol (S500) to allow communication to be performed between the battery module 10 and the external device 20.

As a result of determination in step S300, upon determining that the communication protocol is not the preregistered communication protocol, the processor 120 may analyze rules and a data format of the extracted communication protocol to generate a new communication protocol preset (S400).

The processor 120 establishes communication according to the new communication protocol preset to allow communication to be performed between the battery module 10 and the external device 20 (S500).

Next, the battery module communication processing method will be described in more detail.

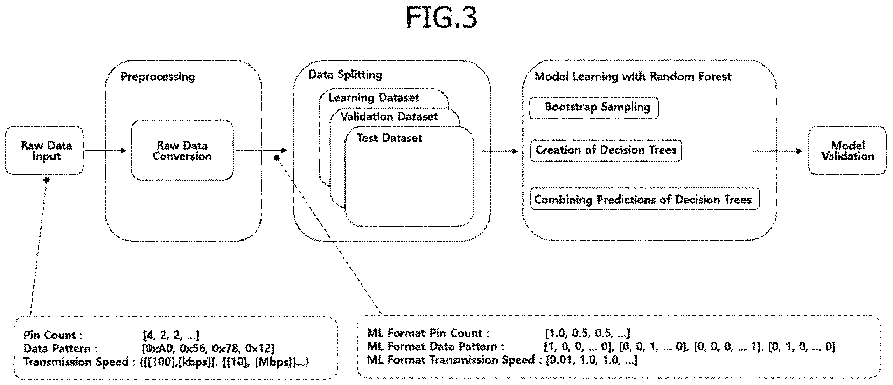

FIG. 3 illustrates a training processor of a machine learning model according to an embodiment of the present invention.

Referring to FIG. 3, the machine learning model may be a random forest model.

Random forest is an ensemble learning method that trains multiple decision trees and synthesizes predictions of the decision trees to draw a final conclusion. Each decision tree is trained based on a subset of data, thereby eliminating a problem of overfitting.

A training process of the random forest model is as follows.

The random forest model may preprocess collected data to be suitable for the random forest model and may perform feature selection. During this process, the random forest model may select important variables or remove unnecessary variables to improve model performance.

The random forest model may divide data into a training dataset, a verification dataset, and a test dataset.

The random forest model may be trained using the training dataset. Here, hyper-parameters, such as the maximum depth of data trees, and the like, may be set.

Specifically, the random forest model may first perform bootstrap sampling.

Upon training each decision tree, the random forest model may extract a bootstrap sample from the training data. The bootstrap sample is a dataset generated through sampling that creates an accurate representation of original data.

The random forest model may generate decision trees. The decision trees are trained based on the bootstrap sample and, at each node, some features are randomly selected to determine an optimal division. This configuration can prevent overfitting while increasing diversity of the model.

The random forest model may combine predictions of the decision trees. When making predictions on test data, the random forest model may produce a final result through combination of predictions of all of the trained decision trees.

The random forest model may use an average of predicted values for regression problems and may use a voting method for classification problems to select the most frequently predicted class as a final result.

Through this process, the random forest model can achieve better performance and generalization than a single decision tree, and can improve robustness to noise and outliers.

Next, a communication protocol determination process will be described.

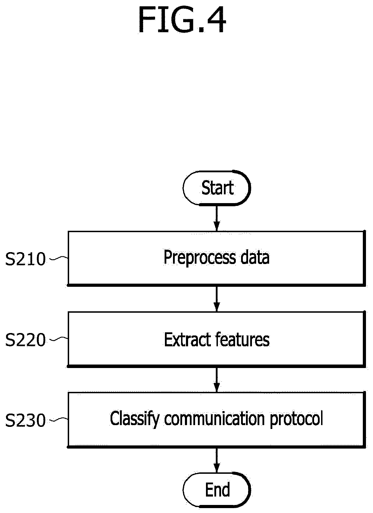

FIG. 4 is a flowchart illustrating a communication protocol determination process according to an embodiment of the present invention;
Referring to FIG. 4, when the connector 110 is connected to the communication port of the battery module 10, a data stream is initiated and the processor 120 may collect data packets for a set period of time. One example of the collected data stream is as follows.
0x7E 0x81 0xA2 0x7E 0x20 0x30 0x7E

The processor 120 may preprocess the collected data (S210).

In this case, the processor 120 may divide the collected data into a set number of bits based on a communication protocol. The set number of bits may be 8 bits, 16 bits, or 32 bits, without being limited thereto.

The processor 120 may identify a beginning, middle, and end identifiers of each packet. For example, the processor 120 may identify Start-of-Frame, End-of-Frame, etc.

The processor 120 may classify the packets using at least one of a bit pattern, a bit length, and a payload.

An example of packet classification for the above data stream is as follows.
Packet 1: 0x7E 0x81 0xA2 0x7E
Packet 2: 0x20 0x30 0x7E

Next, the processor 120 may extract features from the data stream (S220).

In this case, the processor 120 may set a bit length, a header, a payload, and cyclic redundancy check (CRC) of each packet as the features. In addition, the processor 120 may further extract timestamps and inter-packet intervals. The features are not limited to the above embodiment.

The result of feature extraction is as follows.
Packet 1: Length=4, Header=0x7E, Payload=0x81 0xA2, CRC=0x7E
Packet 2: Length=3, Header=0x20, Payload=0x30, CRC=0x7E

The processor 120 may apply the features of the packet to a machine learning model to classify communication protocols (S230).

That is, the processor 120 may train the learning model by labeling the communication protocols to be classified (supervised learning) and applying the features as input values to the machine learning model. Further, the processor 120 may apply the trained model to data in real time to classify the communication protocols.

The result of categorizing the communication protocols is as follows.
Packet 1: Protocol A
Packet 2: Protocol B

Next, a process of generating a communication protocol preset will be described.

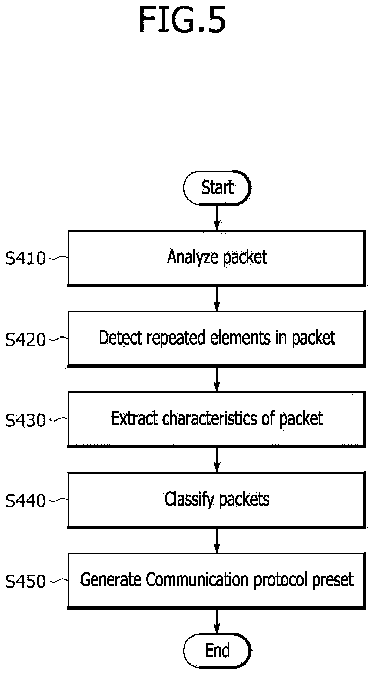

FIG. 5 is a flowchart illustrating a process of generating a communication protocol preset according to an embodiment of the present invention.

Referring to FIG. 5, the processor 120 may analyze the collected packets to determine an existing structure (S410). For example, the processor 120 may determine the header, payload, and CRC of each packet.

The processor 120 may detect a pattern of each packet, that is, repeated elements in each packet (S420).

The processor 120 may extract characteristic information from each packet (S430). The characteristic information of each packet may include a packet length, a bit pattern between the header and the payload, and an end byte. The characteristics of the packet are not particularly limited.

Based on the characteristic information of the extracted packets, the processor 120 may classify which communication protocol the packets belong to (S440). In this case, the processor 120 may use the machine learning model or a rule-based system.

The processor 120 may generate a communication protocol preset for the communication protocols based on the packet classification result (S450).

The communication protocol preset may include header information, payload length, use of CRC, and communication timing, without being limited thereto.

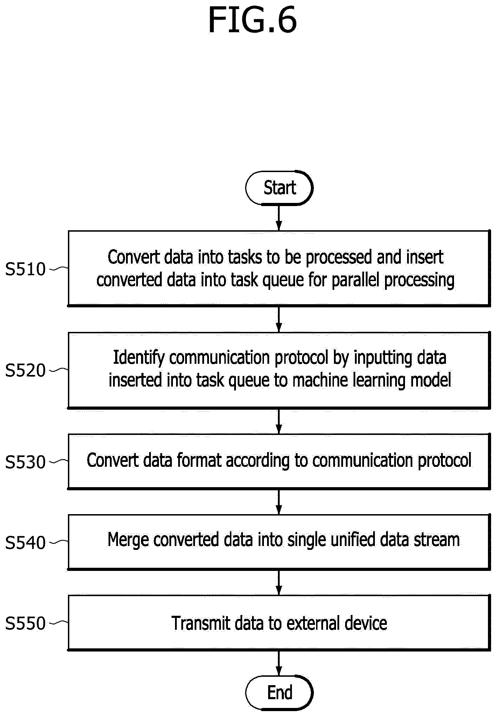

On the other hand, the processor 120 may receive data from each of a plurality of battery modules 10 and input the data into the machine learning model to perform parallel data stream processing to determine the communication protocols in real time and transmit the communication protocols to the external device 20. This will be described with reference to FIG. 6.

FIG. 6 illustrates a parallel data stream processing process according to an embodiment of the present invention.

Referring to FIG. 6, when the connector 110 is connected to the communication port of each of the battery modules 10, the processor 120 may collect data from each of the battery modules 10.

The processor 120 may convert the data into tasks to be processed and insert the converted data into a task queue that can be processed in parallel (S510).

The processor 120 may identify the communication protocol by inputting the data inserted into the task queue into the machine learning model (S520).

The processor 120 may convert the format of the data according to the identified communication protocol (S530) and merge the converted data into a single unified data stream (S540).

The processor 120 may transmit the merged data stream to the external device 20 (S550).

As such, according to the embodiment of the present invention, the battery module communication processing apparatus 100 can facilitate recycling of the battery modules 10 while reducing complexity through improvement in compatibility between various communication protocols used by the battery modules 10.

Further, according to the embodiment of the present invention, the battery module communication processing apparatus 100 can flexibly change the number of battery modules 10 according to a user need, thereby improving utilization of the battery modules 10.

Furthermore, according to the embodiment of the present invention, the battery module communication processing apparatus 100 is compatible with cloud environments to allow improved utilization of energy storage capacity.

Although the present invention has been described with reference to some embodiments and drawings illustrating aspects thereof, the present invention is not limited thereto. Various modifications and variations can be made by a person skilled in the art to which the present invention belongs within the scope of the invention as defined by the appended claims.

## Claims

1. A battery module communication processing apparatus (100) comprising:
a connector (110) configured to connect to and receive data from a communication port of a battery module (10); and
a processor (120) configured to establish communication of the battery module (10) by determining a communication protocol of the battery module (10) based on a number of pins of the connector (110) connected to the communication port and the data of the battery module (10) transmitted through the connector (110).

2. The battery module communication processing apparatus (100) of claim 1, wherein the processor (120) is configured to establish communication of the battery module (10) depending on whether the communication protocol is a preregistered communication protocol.

3. The battery module communication processing apparatus (100) of claim 2, wherein the processor (120) is configured to convert and transmit data between the battery module (10) and an external device (20) according to the communication protocol, upon determining that the communication protocol is the preregistered communication protocol.

4. The battery module communication processing apparatus (100) of claim 2, wherein the processor (120) is configured to generate a new communication protocol preset by analyzing rules of the communication protocol and a format of the data upon determining that the communication protocol is not the preregistered communication protocol.

5. The battery module communication processing apparatus (100) of claim 4, wherein the communication protocol preset comprises at least one of a header information, a payload length, use of cyclical redundancy check, CRC, and a communication timing.

6. The battery module communication processing apparatus (100) of claim 4 or 5, wherein the processor (120) is configured to convert and transmit data between the battery module (10) and an external device (20) according to the communication protocol preset.

7. The battery module communication processing apparatus (100) of any one of claims 4 to 6, wherein the processor (120) is configured to extract characteristic information of packets (1, 2) of the data, classify the packets (1, 2) based on the characteristic information, and generate the communication protocol preset based on a classification result; and wherein the characteristic information of each packet (1, 2) comprises at least one of a length, a bit pattern between a header and a payload, and an end byte thereof.

8. The battery module communication processing apparatus (100) of any one of claims 2 to 7, wherein the processor (120) is configured to apply features of packets (1, 2) classified from the data to a machine learning model to determine whether the communication protocol is the preregistered communication protocol.

9. The battery module communication processing apparatus (100) of claim 8, wherein the machine learning model is trained based on the features of the packets (1, 2) as input values, and the features of each packet (1, 2) comprise at least one of a bit length, a header, a payload, a cyclic redundancy check, CRC, a timestamp, and an inter-packet interval thereof.

10. The battery module communication processing apparatus (100) of any one of the preceding claims, wherein the processor (120) has a directory for managing the battery module (10) and a directory for managing the communication protocol of the battery module (10), item information of the battery module (10) is stored in the directory for managing the battery module (10); and wherein information about the communication protocol of the battery module (10) is stored in the directory for managing the communication protocol.

11. The battery module communication processing apparatus (100) of any one of the preceding claims, wherein the processor (120) is configured to convert each of the data transmitted from each battery module (10) according to the communication protocol, merge the converted data into a data stream, and transmit the data stream to an external device (20).

12. A battery module (10) communication processing method, comprising:
determining that a communication port of a battery module (10) is connected to a connector (110);
recognizing, by a processor (120), a number of pins of the connector (110) connected to the communication port, and determining a communication protocol of the battery module (10) based on data of the battery module (10) transmitted through the connector (110);
determining, by the processor (120), whether the communication protocol is a preregistered communication protocol; and
establishing, by the processor (120), communication of the battery module (10) depending on whether the communication protocol is the preregistered communication protocol.

13. The battery module (10) communication processing method of claim 12, further comprising:
in establishing communication of the battery module (10), by the processor (120), generating a new communication protocol preset by analyzing rules of the communication protocol and a format of the data upon determining that the communication protocol is not the preregistered communication protocol, and
in establishing communication of the battery module (10), by the processor (120), converting and transmitting data between the battery module (10) and an external device (20) according to the communication protocol preset.

14. The battery module (10) communication processing method of claim 12, further comprising:
in establishing communication of the battery module (10), by the processor (120), generating a new communication protocol preset by analyzing rules of the communication protocol and a format of the data upon determining that the communication protocol is not the preregistered communication protocol; and
in establishing communication of the battery module (10), by the processor (120), extracting characteristic information of packets (1, 2) of the data, classifying the packets (1, 2) based on the characteristic information, and generating the communication protocol preset based on a classification result,
wherein the characteristic information of each packet (1, 2) comprising at least one of a length, a bit pattern between a header and a payload, and an end byte thereof.

15. The battery module (10) communication processing method of any one of claims 12 to 14, further comprising:
in determining whether the communication protocol is a preregistered communication protocol, by the processor (120), applying features of packets (1, 2) classified from the data to a machine learning model to determine whether the communication protocol is the preregistered communication protocol,
wherein the machine learning model is trained based on the features of the packets (1, 2) as input values, and the features of each packet (1, 2) comprise at least one of a bit length, a header, a payload, a cyclic redundancy check, CRC, a timestamp, and an inter-packet interval thereof.
